# EUROPEAN PATENT SPECIFICATION

(11) **EP 1 364 775 B1**
(45) Date of publication and mention of the grant of the patent: **16.01.2008**
(21) Application number: 03253219.4
(22) Date of filing: 23.05.2003
(51) Int. Cl.: B32B 7/10, C09J 7/02

(54) **Polymeric films**
Kaltsiegelbare Polymerfilme
Films en polymère scellables à froid

(30) Priority: 23.05.2002 GB 0211772
(43) Date of publication of application: 26.11.2003
(73) Proprietor: AMCOR FLEXIBLES WINTERBOURNE LIMITED, London EC4A 3TR (GB)
(72) Inventor: Massey, Robert James, Bristol BS5 7EJ (GB)
(74) Representative: Claisse, John Anthony

(56) References cited:
- EP-A- 0 514 803
- WO-A-97/48775
- US-A- 4 859 521
- DATABASE WPI Section Ch, Week 199549 Derwent Publications Ltd., London, GB; Class A17, AN 1995-380199 XP002264992 & JP 07 258481 A (DAINIPPON PRINTING CO LTD), 9 October 1995 (1995-10-09)

## Description

This invention concerns polymeric films having cold seal properties, that is the ability of a surface of the film to seal to itself at room temperature by pressure alone, but not to seal to other surfaces under such conditions.

Cold sealability, is usually imparted to polymeric films by applying a coating of an adhesive composition consisting of a rubber dispersed in water or dissolved in a solvent, the composition usually being applied by printing the dispersion or solution on to the surface of the film. However, the use of such compositions is limited by the necessity to apply them as a coating to pre-formed polymeric films.

In theory it should be possible to coextrude cold seal layers with other layers of polymeric films. However, materials used hitherto as printable cold seal layers present problems if coextruded with other layers of a film due to their often having very high melt viscosities which can make coextrusion difficult if not impossible, a lack in many cases of thermal stability at the temperatures used to effect coextrusion, and undesirable adhesion of the film to itself when the film is wound up. This occurs despite cold seal materials supposedly only adhering to themselves.

WO97/48775 describes extrudable polymeric compositions consisting of blends of a tacky adhesive and a non-tacky resin which can be used as a cold seal adhesive for multilayer polymeric films.

US4859521 describes packages of comestibles in plastics films sealed with a cold seal adhesive containing minor amounts of vinylpyrrolidone/styrene copolymer as a bond enhancer.

JP07258481 describes antifog films produced from compositions consisting of an ethylene/alpha-olefin copolymer and a surfactant.

EP0514803-A describes plastics containers with lids sealed with removable lid foils, sealing being with a hot or cold seal layer based on polyolefins, polyvinyl chloride, copolyesters or polyacrylate/methylacrylate.

According to the present invention there is provided a coextruded polymeric film comprising at least one base layer and an outer cold seal layer formed from a blend of a non-polar synthetic rubber and a non-polar tackifier, at least one of the outer surfaces of the film including an antiblock agent.

The antiblock agent can be present in either or both of the outer surfaces of the film, but it is preferably in the layer formed from the blend forming the cold seal layer.

The antiblock agent is preferably in the form of particles having a mean particle size of at least 1µm, and more preferably in the range of from 2 to 20µm.

The antiblock agent can be organic, for example cross-linked acrylic particles, or inorganic, for example talc or glass microbeads.

The amount of antiblock agent when present in the layer formed from a blend of a synthetic rubber and a tackifier is preferably from 5 to 30 percent by weight of the cold seal layer.

Synthetic rubbers used in the cold seal layer of films of the present invention are non-polar. Particularly preferred rubbers for use in accordance with the present invention include tri-block copolymers with two terminal blocks derived from styrene, and more particularly such tri-block polymers containing central blocks derived from one or more aliphatic olefins, for example ethylene, butylene, butadiene and isoprene. Examples of block copolymers for use in accordance with the present invention include styrene/isoprene/styrene copolymers, styrene/(ethylene/co-butylene)/styrene copolymers, and styrene/butadiene/styrene copolymers. The tri-block polymers used in accordance with the present invention will often contain di-block copolymers, that is copolymers consisting of a single block derived from styrene and a single block derived from one or more aliphatic olefins, and this is generally acceptable provided the amount of di-block polymer present does not adversely affect the cold seal properties of the blend containing these materials.

The tackifiers are also non-polar, preferred tackifiers being aliphatic compounds and amorphous tackifiers are also preferred. The mean molecular weight of the tackifier is preferably from 800 to 15000. The glass transition temperature (T_{g}) of the tackifier is preferably from 80 to 135°C, and more preferably about 125°C. A particularly preferred tackifier is sold by Hercules Inc under the Trade Name Regalite R1125.

If a relatively polar rubber is used in compositions in accordance with the present invention it is generally preferred that the tackifier is also relatively polar.

Coextruded cold seal layers of films in accordance with the present invention preferably contain from 40 to 90, more preferably from 50 to 80, percent by weight of synthetic rubber, and from 3 to 30, more preferably from 5 to 20, percent by weight of a tackifier.

Films in accordance with the present invention can be produced by coextruding a blend of a synthetic rubber and a tackifier as an outer layer whilst simultaneously coextruding other layers of the films.

It should be noted that if the tackifier and the synthetic rubber are compounded and granulated to produce a granular feed for the coextrusion process, the granules are generally not free flowing as they tend to adhere to themselves, and this will result in problems in carrying out the coextrusion process.

As an alternative, the synthetic rubber and the tackifier can be granulated separately and then fed to an extruder for producing the cold seal layer, the extruder being relied upon to compound the ingredients within the extruder. However, suitable tackifiers are often extremely brittle, giving rise to difficulties in processing them using conventional polymer processing equipment, for example when blending them with antiblock agents. Furthermore, blending an antiblock agent into a tackifier generally does little to improve the very low melt viscosity of the tackifier, the latter causing problems when attempts are made to blend the tackifier with a rubber using a single screw extruder. Problems therefore arise because of the dramatically different rheological properties of synthetic rubbers and tackifiers.

Films in accordance with the present invention can, however, be satisfactorily produced by feeding a blend of particles of the synthetic rubber and particles of a blend of the tackifier and a polyolefin through a single screw extruder. The particles, which in both cases are preferably in the form of pellets, can be produced separately prior to their being coextruded, using conventional polymer coompounding equipment.

The blend of a tackifier and a polyolefin preferably contains from 20 to 70 percent by weight of a tackifier and from 10 to 40 percent by weight of a polyolefin, based on the weight of the blend. The antiblock agent is preferably present in an amount of up to 50 percent by weight based on the weight of the blend.

The antiblock agent can be present in synthetic rubber particles and/or in the tackifier particles. When present in the synthetic rubber particles rather than in the tackifier particles, the antiblock agent can be present in an amount of up to 50% by weight of the synthetic rubber particles.

The polyolefin is preferably polyethylene, for example having a density of less than 0.930 g/cm³. The melt flow index (MFI) of the polyethylene is preferably less than 10g/min (ISO 1133, at 190°C and 2.16kg). However, other types of polyethylene can be used.

Blends of a tackifier and a polyolefin, optionally containing an antiblock agent, used for producing films in accordance with the present invention can be prepared by melt blending the desired amounts of the various components of the blend and forming them into pellets or granules. Such blends can then themselves be simply physically mixed with particles of the synthetic rubber, optionally containing an antiblock agent, preferably in the form of granules. The resulting mixtures, which in general are free flowing, can be handled by conventional polymer processing and transport methods, this apparently being due to the similarity in the rheological properties of the components of the mixtures. For example they can be fed into a single screw extruder without handling problems, particularly without becoming tacky, and then extruded to form cold seal layers on films produced by coextruding the required further layer or layers of the films.

Films in accordance with the present invention will in general have a single outer layer with either or both outer surfaces containing particles of an antiblock agent which in general should be present in an amount sufficient to reduce blocking between opposite surfaces of the films. Such films can in general be wound up in conventional manner after production and thereafter unwound, since the cold sealable layer does not contact itself during these operations. However, when the cold sealable layer is contacted with itself, it adheres strongly. For example, peel strengths of 5.0N/15mm have been achieved by applying a pressure of 200KPa for 1 second to such films with their cold sealable layers in contact.

The thickness of cold seal layers of films in accordance with the present invention can vary widely, for example depending on the materials used to form the compositions and/or the nature of the film or films on which it is present and/or the intended end use. Thus these layers can be from 0.5 to 50µm thick.

The cold seal layer of films in accordance with the present invention can be formed as coextruded layers directly on other layers of the films. However, a tie layer can be used to improve adhesion of the cold seal layer to other layers of the films. For example, a layer of an ethylene/vinyl acetate copolymer can be used as a tie layer between the cold seal layer and a layer of high density polyethylene.

The following Example is given by way of illustration only.

### Example

A blend of 34 percent by weight of tackifier (Regalite R1125 - Hercules, Inc), 16 percent by weight of low density polyethylene, 20 percent by weight of linear low density polyethylene, and 30 percent by weight of talc were fed to a twin screw extruder and formed into pellets.

41 percent by weight of a styrene/isoprene/styrene block copolymer granules (18 percent by weight of units derived from styrene in the two blocks and less than 1 percent by weight of styrene/isoprene di-block copolymer) were then simply mixed with tackifier/polyethylene granules to form a free flowing mixture of granules.

A three layered polymeric film was then produced by coextruding melts of this blend with melts of two other polymers through a slot die, this blend forming one outer layer of the film, and the other two layers being a second outer layer formed from high density polyethylene and a tie layer of an ethylene vinyl acetate copolymer (9 percent by weight of units derived from vinyl acetate) between the other two layer. The resulting film was cooled and wound up.

The layer formed from a composition in accordance with the present invention was 18µm thick, the tie layer was 10µm thick, and the high density polyethylene layer was 40µm thick.

This film could be easily unwound from the roll. However, it readily cold sealed to itself when the layer formed from the composition in accordance with the present invention was contacted with itself and a pressure of 200KPa was applied for 1 second with the film being at 21°C. The resulting seal had a peel strength of 5.0N/15mm.

## Claims

1. A coextruded polymeric film comprising at least one base layer and an outer cold seal layer formed from a blend of a non-polar synthetic rubber and a non-polar tackifier, at least one of the outer surfaces of the film including an antiblock agent.

2. A film according to claim 1, wherein the cold seal layer contains the antiblock agent.

3. A film according to either of the preceding claims, wherein the antiblock agent has a mean particle size of at least 1µm.

4. A film according to claim 3, wherein the antiblock agent has a mean particle size of from 2 to 20µm.

5. A film according to any of the preceding claims, wherein the synthetic rubber comprises a tri-block copolymers with two terminal blocks derived from styrene.

6. A film according to claim 5, wherein the central block of the tri-block copolymer is derived from one or more aliphatic olefins.

7. A film according to claim 6, wherein the aliphatic olefins comprise ethylene, butylene, butadiene and isoprene.

8. A film according to any of the preceding claims, wherein the synthetic rubber comprises a styrene/isoprene/styrene copolymer, a styrene/(ethylene/co-butylene)/styrene copolymer, or a styrene/butadiene/styrene copolymer.

9. A film according to any of the preceding claims, wherein the tackifier comprises an aliphatic compound.

10. A film according to any of the preceding claims, wherein the tackifier is substantially amorphous.

11. A film according to any of the preceding claims, wherein the tackifier has a mean molecular weight of from 800 to 15000.

12. A film according to any of the preceding claims, wherein the tackifier has a glass transition temperature (T_{g}) of from 80 to 135°C.

13. A film according to any of the preceding claims, wherein the cold seal layer contains a polyolefin.

14. A film according to claim 13, wherein the said polyolefin coprises a polyethylene.

15. A film according to claim 14, wherein the polyethylene has a density of less than 0.930 g/cm³.

16. A method of producing a film according to any of the preceding claims, wherein the components of the cold seal layer are coextruded with melts of polymers required for the base and other required layers.

17. A method according to claim 16, wherein the rubber and the tackifier for the cold seal layer are fed by a single screw extruder, the rubber and the tackifier being in the form of separate pellets, the tackifier pellets themselves having been produced by blending the tackifier with a polyolefin.

## Patentansprüche

1. Koextrudierte Polymerfolie, mindestens eine Basisschicht und eine äußere Kaltpressschweißschicht umfassend, aus einem Gemisch eines unpolaren synthetischen Gummis und eines unpolaren Tackifiers gebildet, wobei mindestens eine Außenschicht der Folie ein Antiblockmittel einschließt.

2. Folie nach Anspruch 1, wobei die Kaltpressschweißschicht das Antiblockmittel enthält.

3. Folie nach dem einem oder anderen vorangehenden Anspruch, wobei das Antiblockmittel eine durchschnittlichen Partikelgröße von mindestens 1 µm hat.

4. Folie nach Anspruch 3, wobei das Antiblockmittel eine durchschnittliche Partikelgröße von 2 bis 20 µm hat.

5. Folie nach einem der vorangehenden Ansprüche, wobei der synthetische Gummi ein Triblock-Copolymer mit zwei von Styren abgeleiteten terminalen Blöcken umfasst.

6. Folie nach Anspruch 5, wobei der zentrale Block des Triblock-Copolymers von einem oder mehreren aliphatischen Olefinen abgeleitet ist.

7. Folie nach Anspruch 6, wobei die aliphatischen Olefine Ethylen, Butylen, Butadien und Isopren umfassen.

8. Folie nach einem der vorangehenden Ansprüche, wobei der synthetische Gummi ein Styren/Isopren/Styren-Copolymer, eine Styren/(Ethylen/Co-Butylen)/Styren-Copolymer oder ein Styren/Butadien/Styren-Copolymer umfasst.

9. Folie nach einem der vorangehenden Ansprüche, wobei der Tackifier eine aliphatische Verbindung umfasst.

10. Folie nach einem der vorangehenden Ansprüche, wobei der Tackifier im wesentlichen amorph ist.

11. Folie nach einem der vorangehenden Ansprüche, wobei der Tackifier ein durchschnittliches Molekulargewicht von 800 bis 15000 hat.

12. Folie nach einem der vorangehenden Ansprüche, wobei der Tackifier eine Glasumwandlungstemperatur (T_{G}) von 80 bis 135 °C hat.

13. Folie nach einem der vorangehenden Ansprüche, wobei die Kaltpressschweißschicht ein Polyolefin enthält.

14. Folie nach Anspruch 13, wobei das besagte Polyolefin ein Polyethylen umfasst.

15. Folie nach Anspruch 14, wobei das Polyethylen eine Dichte von weniger als 0,930 g/cm³ hat.

16. Verfahren zur Herstellung einer Folie nach einem der vorangehenden Ansprüche, wobei die Komponenten der Kaltpressschweißschicht mit Polymerschmelzgut koextrudiert sind, das für die Basis und andere erforderliche Schichten erforderlich ist.

17. Verfahren nach Anspruch 16, wobei der Gummi und der Tackifier für die Kaltpressschweißschicht von einem Extruder mit einer Schnecke bereitgestellt werden, wobei der Gummi und der Tackifier die Form einzelner Pellets aufweisen, wobei die Tackifierpellets selbst durch Mischen des Tackifiers mit einem Polyolefin hergestellt wurden.

## Revendications

1. Film polymère coextrudé comprenant au moins une couche de base et une couche de soudage à froid externe que l'on forme à partir d'un mélange d'un caoutchouc synthétique non polaire et d'un agent non polaire renforçant la collabilité, au moins l'une des surfaces externes du film comprenant un agent antiadhérent.

2. Film selon la revendication 1, dans lequel la couche de soudage à froid contient l'agent antiadhérent.

3. Film selon l'une ou l'autre des revendications précédentes, dans lequel l'agent antiadhérent a une taille de particule moyenne d'au moins 1 µm.

4. Film selon la revendication 3, dans lequel l'agent antiadhérent a une taille de particule moyenne de 2 à 20 µm.

5. Film selon l'une quelconque des revendications précédentes, dans lequel le caoutchouc synthétique comprend un copolymère tribloc à deux blocs terminaux dérivés du styrène.

6. Film selon la revendication 5, dans lequel le bloc central du copolymère tribloc est dérivé d'une ou de plusieurs oléfines aliphatiques.

7. Film selon la revendication 6, dans lequel les oléfines aliphatiques comprennent l'éthylène, le butylène, le butadiène et l'isoprène.

8. Film selon l'une quelconque des revendications précédentes, dans lequel le caoutchouc synthétique comprend un copolymère de styrène/isoprène/styrène, un copolymère de styrène/(éthylène/co-butylène)/styrène ou un copolymère de styrène/butadiène/styrène.

9. Film selon l'une quelconque des revendications précédentes, dans lequel l'agent renforçant la collabilité comprend un composé aliphatique.

10. Film selon l'une quelconque des revendications précédentes, dans lequel l'agent renforçant la collabilité est en grande partie amorphe.

11. Film selon l'une quelconque des revendications précédentes, dans lequel l'agent renforçant la collabilité a une masse moléculaire moyenne de 800 à 15000.

12. Film selon l'une quelconque des revendications précédentes, dans lequel l'agent renforçant la collabilité a une température de transition vitreuse (Tᵥ) de 80 à 135°C.

13. Film selon l'une quelconque des revendications précédentes, dans lequel la couche de soudage à froid contient une polyoléfine.

14. Film selon la revendication 13, dans lequel ladite polyoléfine comprend un polyéthylène.

15. Film selon la revendication 14, dans lequel le polyéthylène a une densité inférieure à 0,930 g/cm³.

16. Procédé de production d'un film selon l'une quelconque des revendications précédentes, dans lequel les composants de la couche de soudage à froid sont coextrudés avec les produits fondus de polymères requis pour la couche de base et pour d'autres couches requises.

17. Procédé selon la revendication 16, dans lequel le caoutchouc et l'agent renforçant la collabilité pour la couche de soudage à froid sont fournis par une extrudeuse à une vis, le caoutchouc et l'agent renforçant la collabilité étant sous la forme de pastilles distinctes, les pastilles d'agent renforçant la collabilité elles-mêmes ayant été produites en mélangeant l'agent renforçant la collabilité avec une polyoléfine.
